# EUROPEAN PATENT SPECIFICATION

(11) **EP 2 261 382 B1**
(45) Date of publication and mention of the grant of the patent: **21.03.2012**
(21) Application number: 09724869.4
(22) Date of filing: 24.03.2009
(51) Int. Cl.: B32B 5/22, C14B 7/04

(54) **SPLIT LEATHER PRODUCT AND MANUFACTURING METHOD THEREFOR**
SPALTLEDERPRODUKT UND HERSTELLUNGSVERFAHREN DAFÜR
PRODUIT EN CROÛTE DE CUIR ET SON PROCÉDÉ DE FABRICATION

(30) Priority: 24.03.2008 JP 2008076225; 30.01.2009 JP 2009019482
(43) Date of publication of application: 15.12.2010
(73) Proprietor: Kuraray Co., Ltd., Okayama 710-8622 (JP)
(72) Inventor: YONEDA, Hisao, Okayama-shi Okayama 702-8601 (JP); KIMURA, Yoshio, Osaka-shi Osaka 530-8611 (JP); WAKIMOTO, Yoshiaki, Okayama-shi Okayama 702-8601 (JP); MIYAUCHI, Kiyohiko, Iida-shi Nagano 395-0821 (JP)
(74) Representative: Müller-Boré & Partner Patentanwälte
(86) International application number: PCT/JP2009/055762
(87) International publication number: WO 2009/119551

(56) References cited:
- EP-A2- 1 273 693
- DE-U1- 20 318 306
- JP-A- 8 035 000
- JP-A- 9 241 700
- JP-B- 6 041 599
- US-A- 4 581 261

## Description

### Technical Field

The present invention relates to a split leather product that uses split leather obtained by removing the grain side portion from natural leather (hereafter also referred to simply as leather). More particularly, the present invention relates to a split leather product having a feel resembling that of full grain leather or napped leather such as suede, and to a method for manufacturing such split leather product.

### Background Art

The skin of animals such as mammals has a two-layer structure, namely epidermis and dermis, having each a dissimilar tissue structure. Skins from animals are processed into leather by way of the following treatments. Firstly, the skin is unhaired and the epidermis removed, to obtain the dermis. The dermis comprises mainly longitudinal and transversally crisscrossing collagen fibers. These collagen fibers contribute to maintaining the high physical strength of leather.

The tissue structure of the dermis can be divided into a top papillary layer and an inner reticular layer. The papillary layer has an uneven pattern unique to the animal, and the surface thereof, called grain side, has a smooth excellent appearance. The top grain layer extending from the papillary layer to the top of the reticular layer is cut out, and the obtained top grain layer is subjected to processes such as tanning and dyeing, after which the surface is coated to yield the a leather product called full grain leather. By virtue of its superior appearance, full grain leather has come to be preferably used in applications such as footwear, apparel, bags, miscellaneous goods, furniture, vehicle interiors and the like. However, full grain leather is expensive, since it is limited by the supply of animal resources.

The portion from the top of the reticular layer downwards, which remains after cutting out the top grain layer, is called split leather. Split leather has poorer appearance characteristics as compared to full grain leather obtained from the top grain layer. Therefore, split leather is used as a grain-finished split leather product having formed, on the surface thereof, a resin layer that resembles the grain side of full grain leather.

Conventionally proposed methods for manufacturing the grain-finished split leather products include the following. Firstly there is formed a resin layer through coating and drying of a polyurethane resin solution on an embossed release paper having a textured pattern formed thereon, and then the obtained resin layer is bonded to the split leather surface. The embossed release paper is then stripped off, to yield a resin layer, resembling a grain side, formed on the split leather surface. However, split leather products obtained in accordance with the above method had the following problems. The leather exhibits numerous irregularities, derived from wrinkles, blood vessel vestiges and the like, that vary depending on the part of the animal's skin. These irregularities derived from wrinkles, blood vessel vestiges and the like were problematic in that they marred the appearance of the grain-finished split leather product. Specifically, for instance, the resin layer is pulled thinner when the split leather product having the resin layer is drawn in on a shoemaking last or the like, as a result of which the irregularities on the split leather become manifest on the split leather product surface. This phenomenon is called roughening (surface irregularities, *orange peel").
Patent Document 1 : Japanese Patent Application Laid-open No. H5-345384
Patent Document 2: Japanese Patent Application Laid-open No. H7-242900
Patent Document 3: Japanese Patent Application Laid-open No. No. 2004-339617

In order to solve the above problem, Patent Document 1 for instance discloses a split leather product in which a synthetic resin buffer layer comprising a wet-type resin microporous layer is bonded, by way of an adhesive, between split leather and a polyurethane resin surface skin. Patent Document 1 indicates that the synthetic resin buffer layer has the effect of eliminating (buffering) the influence of the irregularities of the split leather surface on the surface of the polyurethane resin surface skin.

Patent Document 2 discloses a split leather product in which a skin layer comprising a polyurethane resin is formed on the surface of split leather by way of an adhesive layer made of a synthetic resin. The adhesive that forms the adhesive layer contains 10 to 60 parts by weight of a filler relative to 100 parts by weight of the resin. Patent Document 2 indicates that providing the above adhesive layer made of the synthetic resin allows suppressing the manifestation of the irregularities of split leather on the surface of the split leather product.

Napped leather, such as suede or nubuck having a nap-raised finish, is also known as a leather product having a peculiar texture that is different from that of full grain leather. Napped leather is obtained by buffing the topside or underside of the top grain layer of leather, to create a velvety nap. However, napped leather was problematic, like full grain leather, in being limited by the supply of animal resources, and being hence expensive. In order to solve the above problem, Patent Document 3 for instance discloses suede-finished artificial leather as artificial leather that resembles napped leather. Suede-finished artificial leather is obtained by napping through buffing the surface of a sheet that comprises a composite body of an entangled nonwoven fabric formed from microfine fibers and a polymeric elastomer that impregnates the gaps in the entangled nonwoven fabric. However, the above suede-finished artificial leather was problematic in that the main component thereof was the composite body of the entangled nonwoven fabric formed from microfine fibers and the polymeric elastomer impregnated into the entangled nonwoven fabric, for which reason the specific gravity of the leather was small, and the leather had poorer physical strength than napped leather from natural leather. The suede-finished artificial leather failed therefore to realize a surface texture having a well-rounded feel, as that of napped leather from natural leather, even when the surface of the suede-finished artificial leather was imparted a texture resembling the nap of napped leather from natural leather. The bent shape of the suede-finished artificial leather differed thus significantly from that of napped leather from natural leather. Since the suede-finished artificial leather was deficient in a well-rounded feel, the sewn products thereof were prone to exhibit seam puckering (distortion caused by gathering and cramping at seams) during sewing, which was problematic. A further problem of the leather was its poor flame retardancy. Conventional suede-finished artificial leather on its own did not afford sufficient flame retardancy when used in interiors or car sheets, where high flame retardancy is required. Therefore, suede-finished artificial leather was ordinarily subjected to a flame retardancy treatment by being coated with a liquid preparation containing a flame retardant agent and a binder, followed by drying. During the flame retardancy treatment, the microfine fibers that make up the napped fibers or the entangled nonwoven fabric become fixed by way of the binder, as a result of which the suede-finish texture is lost. Fixing of the napped fibers impairs also both appearance and touch. Therefore, the flame retardancy treatment had to be conventionally followed by a tumbling treatment for relaxing the fixed fibers to restore thereby the suede-finish texture. Such a treatment was highly cumbersome within the manufacturing process, and constituted therefore a cost-driving factor.

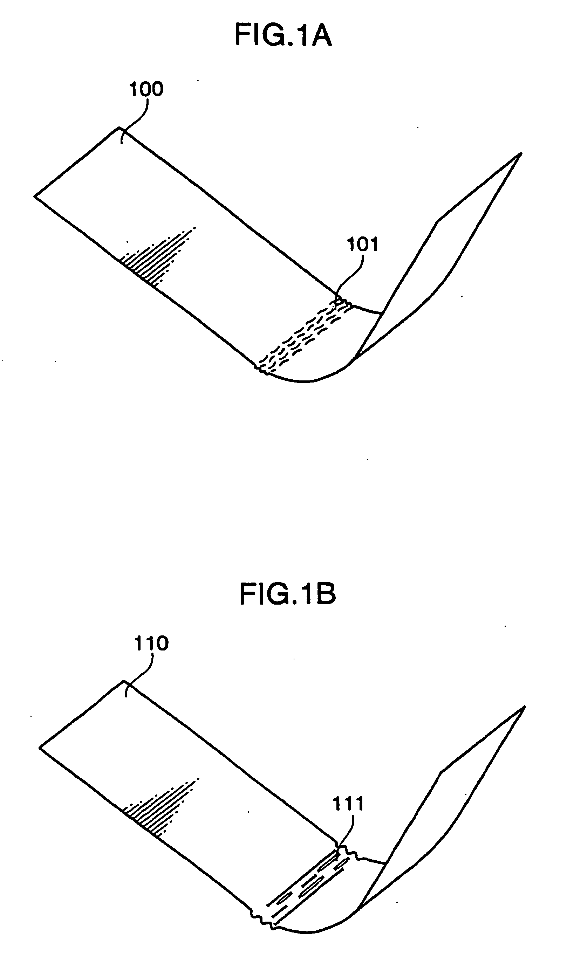

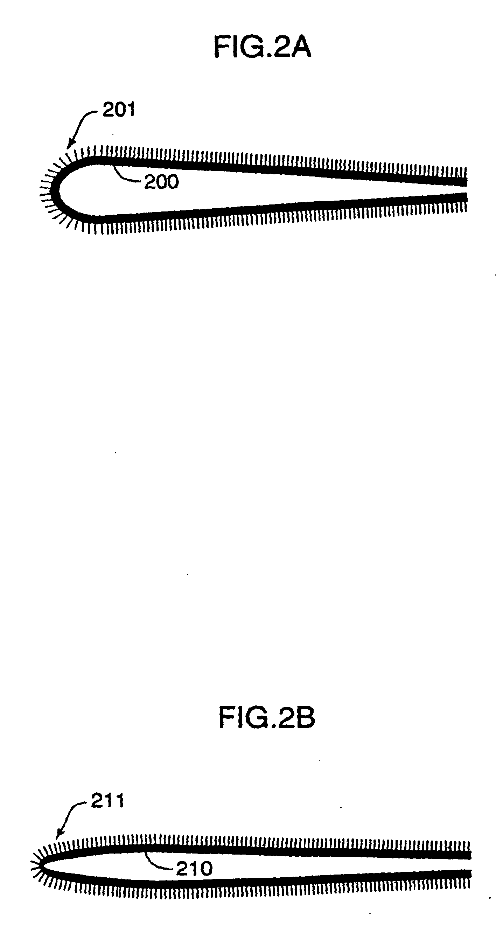

The grain-finished split leather products disclosed in Patent Documents 1 and 2, and the suede-finished artificial leather disclosed in Patent Document 3 had a further problem in that the feel in terms of, for instance, the shape of wrinkles resulting when they were bent was completely different from that of leather. Specifically, for instance, when full grain leather 100 is concavely bent, it gives rise to fine bending wrinkles (fine break) 101 having high-quality feel, such as those illustrated in Fig. 1A. By contrast, a conventional grain-finished split leather product 110 gives merely rise, when concavely bent, to coarse bending wrinkles 111 lacking in high-quality feel, such as those illustrated in Fig. 1B, which are different from those of the full grain leather 100. When suede 200 is bent convexly, as illustrated for instance in Fig. 2A, a rounded bent shape 201 having a high-quality feel is obtained. When suede-finished artificial leather 210 is bent convexly, by contrast, there was merely obtained a bent shape, resulting from bending at the fold, having a sharp angle 211 and lacking high-quality feel, such as the one illustrated in Fig. 2B.

### Disclosure of the Invention

An aspect of the invention is a split leather product provided with a base material comprising split leather, and a skin layer laminated on a surface of the base material. The skin layer comprises a composite body of an entangled nonwoven fabric formed from microfine fibers, and a polymeric elastomer that impregnates the gaps in the entangled nonwoven fabric.

The entangled nonwoven fabric in such a split leather product has the effect of increasing physical strength without detracting from a leather-like texture, in the same way as the longitudinally and transversally crisscrossing collagen fibers in the reticular layer of leather. It is thus possible to obtain a split leather product that resembles leather not only in outward appearance, but also in the feel derived from wrinkles and the like resulting when the leather is bent.
DE 203 18 306 U1 discloses a base material with a velour-like finish, e.g. for use in cars, comprising shagreen, split leather or synthetic velour with a fibrous surface which is bonded with a finish by a coupling layer on part of the surface. EP 1 273 693 discloses a leather-like sheet material comprising a substrate layer composed of an entangled nonwoven fabric consisting of ultrafine fibers and an elastic polymer or elastomer filled therein and having, on one side (side A) of the substrate layer, a grain layer comprising an elastomer mainly consisting of a polyurethane, wherein the ultrafine fibers (a) constituting the side A of the substrate layer have a mean fineness substantially within the range of 0.01 to 0.5 decitex and the ultrafine fibers (b) substantially constituting the other side (side B) opposite to the side A of the substrate layer have a mean fineness of not more than 1/2 of the mean fineness of the ultrafine fibers (a).

### Brief Description of the Drawings

[Fig. 1] Fig. 1A is an explanatory diagram illustrating schematically the aspect of bending wrinkles when full grain leather is bent concavely; Fig. 1B is an explanatory diagram illustrating schematically the aspect of bending wrinkles when a conventional grain-finished split leather product is bent concavely.
[Fig. 2] Fig. 2A is an explanatory diagram illustrating schematically the aspect of the bent shape when suede is bent convexly; Fig. 2B is an explanatory diagram illustrating schematically the aspect of the bent shape when a conventional suede-finished artificial leather is bent convexly.
[Fig. 3] Fig. 3 illustrates a schematic cross-sectional diagram of a split leather product according to the present invention.
[Fig. 4] Fig. 4 illustrates a schematic cross-sectional diagram of a grain-finished split leather product according to the present invention.
[Fig. 5] Fig. 5 illustrates a schematic cross-sectional diagram of a nap-finished split leather product according to the present invention.

### Best Mode for Carrying Out the Invention

In conventional split leather products, a resin layer comprising a polyurethane resin was formed on the surface of comparatively thin split leather. The outward appearance of such split leather product resembled that of full grain leather, but the feel did not, owing to, for instance, a shape of wrinkles that appeared upon bending. As a result of diligent research into the feel that arises upon bending, the inventors have arrived at the findings below on the reasons why a feel resembling that of natural leather failed to be achieved.

Split leather is a byproduct that is obtained after cutting and stripping leather derived from the top grain layer of the animal's skin. This precludes as a result obtaining split leather of sufficient thickness. The leather derived from the top grain layer of the animal's skin has predominantly collagen fibers in the thickness direction. The physical strength of the leather is maintained by these collagen fibers.

A resin layer is formed on the split leather surface in conventional split leather products. When a conventional grain-finished split leather product is concavely bent, the resin layer at the concavely bent portion fails to conform to the split leather, as a result of which the bending wrinkles of the resin layer become coarse, as illustrated in Fig. 1B. On the other hand, artificial leather tends to have a low apparent density. When bent, therefore, artificial leather fails to withstand the bending force upon bending, and tends to curve excessively as compared with split leather. Thus, when artificial leather is convexly bent, a sharp-angled crease forms along the convexly bent portion, as illustrated in Fig. 2B.

The inventors found that a layer which resembles a top grain layer containing collagen fibers could be formed by reinforcing the surface of split leather using a composite body that comprises an entangled nonwoven fabric formed from microfine fibers and a polymeric elastomer contained within the entangled nonwoven fabric. The inventors found that the above features could allow achieving a feel, which arises from wrinkles upon bending, similar to that of natural leather.

A split leather product of the present embodiment is explained in detail next with reference to accompanying drawings.

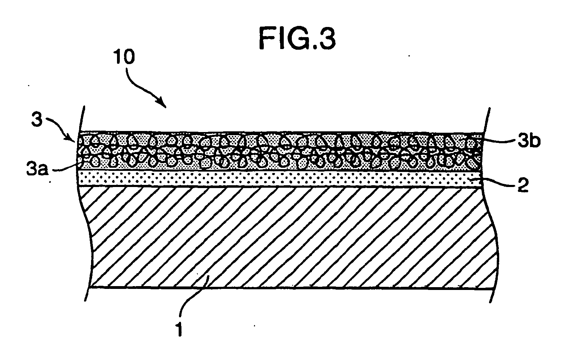

Fig. 3 illustrates a schematic cross-sectional diagram of the split leather product 10 of the present embodiment. In Fig. 3, the reference numeral 1 denotes a base material comprising split leather, 2 denotes an adhesive layer, and 3 denotes a skin layer. As illustrated in Fig. 3, the skin layer 3 is bonded to the base material 1 through adhesion via the adhesive layer 2. The skin layer 3 is formed from a composite body of an entangled nonwoven fabric 3a formed from microfine fibers, and a polymeric elastomer 3b that impregnates the interior of the entangled nonwoven fabric 3a.

The base material 1 used in the present embodiment is not particularly limited and may be a known conventional split leather. Such split leather may be obtained, for instance, through unhairing a hide of animals, for instance mammals, with subsequent splitting the hide into a top grain layer from the surface downwards to the top of the reticular layer, and into a lower layer from the top of the reticular layer downwards, followed by processing the lower layer through tanning, dyeing, buffing, pressing and so forth.

The characteristics of the split leather, as well as the thickness and outward appearance thereof vary markedly depending on the part of the animal hide. In the manufacture of conventional split leather products, therefore, it was necessary to check whether all sections of the cut split leather had practicable strength or not. Thereupon, the split leather that conformed to certain specifications was accepted as a product, or was discarded when it failed to conform to the specifications. The inspection process and the discarding of non-conforming split leather were factors that drove up costs. The split leather product of the present embodiment can do away with the inspection process, since the skin layer is bonded to the split leather. Drops in the yield of the split leather can be also curtailed.

The thickness of the base material 1 ranges preferably from 0.5 to 3 mm, more preferably from 0.8 to 2 mm. If the base material 1 is too thin, it is harder to achieve a leather-like texture. It tends to result also in insufficient flame retardancy, and in poorer mechanical characteristics such as tear strength.

The skin layer 3 comprises the entangled nonwoven fabric 3a made up of microfine fibers and the polymeric elastomer 3b that impregnates the gaps in the entangled nonwoven fabric 3a. Providing such a skin layer 3 allows forming a layer that resembles a top grain layer, containing collagen fibers, on the split leather surface. Such a skin layer 3 suppresses moreover excessive bending when the split leather product 10 is convexly bent. During concave bending, the skin layer 3 can conform to the bending of the base material 1 since the polymeric elastomer 3b is supported by the entangled nonwoven fabric 3a.

As the entangled nonwoven fabric 3a, conventional entangled nonwoven fabrics can be used without limitations. Specific examples thereof include, for instance, staple (short-fiber) entangled nonwoven fabrics, which are obtained by forming a web from staple fibers, overlaying then a plurality of webs, and entangling the fibers by needle punching or the like; and filament(long-fiber) entangled nonwoven fabrics that are obtained in accordance with known methods such as spun-bonding, melt blowing or the like.

Specific examples of the fibers for forming the entangled nonwoven fabric that comprise microfine fibers include, for instance, polyester fibers such as polyethylene terephthalate (PET) fibers; polyamide fibers; polyolefin fibers; polyvinyl alcohol fibers; or elastomers fibers such as polyurethane elastomer fibers. Preferred among the foregoing are PET fibers and polyamide fibers, on account of their excellent dyeability, and superior balance between mechanical characteristics and texture.

The fineness of the microfine fibers ranges preferably from 0.0001 to 0.5 dtex, and more preferably from 0.001 to 0.1 dtex. Such microfine fibers are low-stiffness, supple fibers. Therefore, the microfine fibers can impart a reinforcing effect without excessive hardening of the texture of the obtained split leather product. As a result, the split leather product adopts a rounded bent shape, resembling that of natural leather, when it is convexly bent, and exhibits fine bending wrinkles (fine break), resembling those of natural leather that comprises a skin layer, when the split leather product is bent concavely.

The basis weight of the entangled nonwoven fabric ranges preferably from 50 to 1000 g/m², more preferably from 120 to 600 g/m², from the viewpoint of avoiding too hard a texture in the split leather product.

As the polymeric elastomer that impregnates the gaps in the entangled nonwoven fabric, there can be used, for instance, a polyurethane elastomer, an acrylic elastomer, a polyester elastomer as well as copolymers and mixtures thereof. Polyurethane elastomers are preferred among the foregoing in terms of imparting a leather-like texture.

Specific examples of the polyurethane elastomer include, for instance, various polyurethane resins such as polycarbonate-polyurethane resins, polyester-polyurethane resins or polyether-polyurethane resins. They are obtained through reaction of a polymer diol having an average molecular weight of 500 to 3000 with an organic diisocyanate, at predetermined mole ratios, together with a chain extender. Preferred among the foregoing, in terms of durability and fastness, are polyether-polyurethane resins and polycarbonate-polyurethane resins.

The content proportion of the polymeric elastomer in the composite body of the entangled nonwoven fabric and the polymeric elastomer ranges preferably from 5 to 70 wt%, more preferably from 10 to 60 wt%. An excessively low content ratio of the polymeric elastomer results in poorer cushioning, harder texture, and makes roughening likelier to occur. An excessively high content proportion of the polymeric elastomer tends to give rise to a rubber-like texture that does not resemble the texture of leather.

The split leather product can be sufficiently reinforced, while preserving a leather-like texture, when the thickness of the skin layer 3 ranges from 0.1 to 2 mm, more preferably from 0.2 to 1.5 mm, and in particular from 0.4 to 0.8 mm. These thickness ranges are preferable in that they result in leather-like rounded bending wrinkles when the split leather product is convexly bent, and in leather-like fine bending wrinkles (fine break) when the split leather product is bent concavely. The above thickness ranges are also preferred in that they allow suppressing sufficiently the occurrence of roughening.

The skin layer 3 in the split leather product of the present embodiment is bonded to the base material 1 which comprises split leather, by way of the adhesive layer 2. The skin layer 3 and the base material 1 may be bonded by any other means, and thus the adhesive layer 2 is not an essential feature of the present invention.

Specific examples of the adhesive for forming the adhesive layer 2 include, for instance, polyurethane resin adhesives, acrylic resin adhesives, polyamide resin adhesives, polyester resin adhesives and the like. Preferred among the foregoing are polyurethane resin adhesives in that they afford adequate elongation, and can thus preserve their bonding strength to accommodate deformation even when the deformation is caused by bending. The thickness of the adhesive layer is not particularly limited, but ranges ordinarily from about 0.005 to 1 mm.

The method for forming the adhesive layer is not particularly limited. The adhesive layer may be formed extending over an area or may be formed in a dotted fashion.

In the split leather product of the present embodiment, the thickness proportion of the base material 1 with respect to the overall thickness ranges preferably from 50 to 95%, more preferably from 55 to 80%. When the thickness proportion of the base material 1 is too low, it is harder to achieve a texture resembling that of natural leather, and flame retardancy tends to be poorer. An excessively high thickness proportion of the base material 1 tends to make it harder to suppress roughening. In the below-described nap-finished split leather product, the thickness proportion of the base material denotes the proportion with respect to the overall thickness excluding that for napped fibers.

An appearance resembling that of full grain leather can be imparted to the split leather product of the present embodiment by forming a grain-finished resin layer on the surface of the split leather product. An appearance resembling that of napped leather, such as suede, can also be imparted by napping the surface of the split leather product.

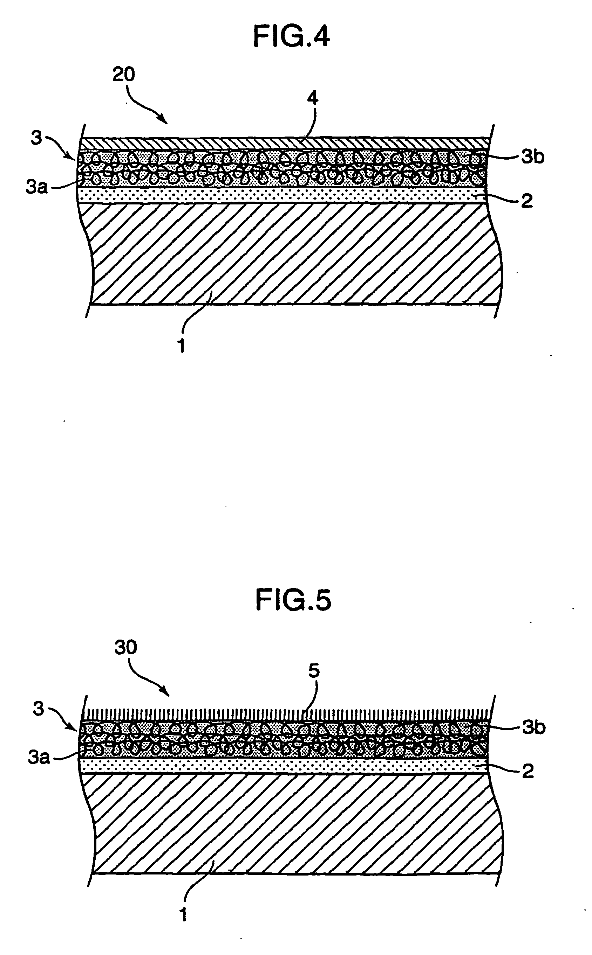

Fig. 4 illustrates a schematic cross-sectional diagram of a grain-finished split leather product 20 having a resin layer 4. The reference numerals in Fig. 4 that are identical to those of Fig. 3 denote the same elements as in Fig. 3.

The resin component for forming the resin layer 4 is not particularly limited. Specific examples thereof include, for instance, various polyurethane elastomers such as polycarbonate-polyurethane elastomers, polyester-polyurethane elastomers, polyether-polyurethane elastomers or the like; as well as acrylic elastomers, polyurethane-acrylic composite elastomers, polyvinyl chloride elastomers, synthetic rubber or the like. These resin components may be used singly or in combinations of two or more. Various additives may also be added, as the case may require. Preferred among the foregoing are polyurethane elastomers, since they afford excellent mechanical characteristics, such as wear resistance and bending resistance, in the surface layer.

For instance, the resin layer 4 is formed, as described below, by thermal melt bonding of a film that is obtained through hot pressing of a nonwoven fabric that comprises the resin component, or by coating the surface with the resin component for forming the resin layer, followed by coagulation by drying. In particular, the resin layer obtained by making a nonwoven fabric comprising the resin component into a film by hot pressing is preferred in that the resin layer thus obtained has numerous small gaps formed therein, thus imparting excellent moisture permeability to the obtained split leather product.

The resin layer 4 may have a multilayer structure that comprises an undercoat layer and a topcoat layer, in which the undercoat layer comprises a polyurethane resin or the like and is formed on the surface of the skin layer 3 with a view to enhancing adhesion with the skin layer 3, and the topcoat layer comprises for instance a polyurethane resin or an acrylic resin and is formed on the surface in view of surface strength and in order to diversify the appearance of the surface. Preferably, the resin layer 4 has an embossed pattern formed by using a conventional embossing machine. The surface of the obtained grain-finished split leather product can be decorated by being provided with such an embossed pattern.

Preferably, the thickness of the resin layer 4, ranges from 0.005 to 0.1 mm, more preferably from 0.01 to 0.05 mm, in terms of imparting a grain-finished appearance while preserving a leather-like soft texture.

In the grain-finished split leather product 20, the ratio between the thickness of the resin layer 4 and the thickness of the skin layer 3 (resin layer 4/skin layer 3) is preferably no greater than 0.12, more preferably no greater than 0.10, and not smaller than 0.003, more preferably not smaller than 0.005. The above ratios are preferred in terms of achieving a texture that resembles leather yet more closely. Too high a thickness ratio implies a relatively lower proportion of skin layer 3, which makes it harder to bring out a sufficient reinforcement effect.

As described above, the grain-finished split leather product 20 has a feel and appearance resembling those of full grain leather comprising a skin layer of natural leather. Moreover, the irregularities in the surface of the base material 1 comprising the split leather are prevented from appearing on the surface of the grain-finished split leather product 20.

Next, an explanation follows, with reference to Fig. 5, on a nap-finished split leather product having an appearance resembling that of napped leather such as suede or the like.

Fig. 5 illustrates a schematic cross-sectional diagram of the nap-finished split leather product 30. The reference numerals in Fig. 5 identical to those of Fig. 3 denote the same elements as in Fig. 3.

The nap-finished split leather product 30 has napped fibers 5 resulting from napping microfine fibers that are present on the surface layer of the skin layer 3.

The nap length and nap density of the napped fibers 5 are not particularly limited, and are adjusted depending on the application. Specifically, the nap length ranges preferably from, for instance, 0.05 to 2 mm, and the nap density is preferably of 1000 fibers/cm² or greater.

Thus, the nap-finished split leather product 30 has a feel and appearance resembling those of napped leather such as suede or the like. Moreover, the irregularities in the surface of the base material 1 comprising the split leather can be prevented from appearing on the surface of the nap-finished split leather product 30.

Next, an example of a method for manufacturing the split leather product is explained in detail.

A method for manufacturing the skin layer will be explained first.

Specific methods for manufacturing the skin layer include, for instance, methods (i) and (ii) below.

In method (i) there are obtained microfine fiber-forming fibers through melt spinning of two or more fiber-forming polymers having dissimilar solubility, dispersibility and compatibility. The entangled nonwoven fabric is then manufactured using the obtained microfine fiber-forming fibers. A liquid preparation of the polymeric elastomer, prepared in liquid form, is impregnated into the obtained entangled nonwoven fabric, and the polymeric elastomer is coagulated.
The microfine fiber-forming fibers are made into microfine fibers. The above processes yield a composite body that comprises an entangled nonwoven fabric formed from microfine fibers, and a polymeric elastomer that is contained in the gaps in the entangled nonwoven fabric.

In method (ii) the entangled nonwoven fabric is manufactured using microfine fiber-forming fibers. The obtained microfine fiber-forming fibers are made into microfine fibers, into which there is impregnated a liquid preparation of the polymeric elastomer. The polymeric elastomer is then coagulated to yield a composite body.

The present embodiment is explained in detail below focusing in an instance where sea-island type microfine fiber-forming fibers are used as the microfine fiber-forming fibers.

Examples of entangled nonwoven fabrics include staple entangled nonwoven fabrics and filament entangled nonwoven fabrics. Staple entangled nonwoven fabrics are obtained, for instance, by forming a web using staple fibers that comprise microfine fiber-forming fibers, after which a plurality of such webs are stacked onto each other and the fibers are entangled through needle punching or the like. Filament entangled nonwoven fabrics are obtained through entangling, in accordance with known methods, of filament nonwoven fabrics comprising microfine fiber-forming fibers that are obtained in accordance with known methods, such as a spun-bonding and melt blowing.

The microfine fibers that form the entangled nonwoven fabric are obtained using microfine fiber-forming fibers that comprise at least two types of resin components. In the case of sea-island type microfine fiber-forming fibers, for instance, the fibers comprise a component that dissolves in a predetermined solvent or is disaggregated by a predetermined disaggregating agent, and a component that not dissolve in the predetermined solvent or disaggregate in the predetermined disaggregating agent, such that the cross-sectional shape of the fiber exhibits a sea-island structure. One of the components alone is then removed from such fibers to form fibrillated microfine fibers.

The resin component that forms the microfine fibers may be, for instance, a melt-spinnable polyester, such as polyethylene terephthalate, polybutylene terephthalate, cationic-dyeable modified polyethylene terephthalate or the like; a melt-spinnable polyamide such as 6-nylon, 66-nylon or the like; or a polyolefin such as polypropylene or the like.

As the resin component that dissolves in a predetermined solvent or is disaggregated by a predetermined disaggregating agent, there is preferably used a resin component whose solubility in the predetermined solvent, or disaggregation ability by the predetermined disaggregating agent, is dissimilar from that of the resin component for forming the microfine fibers. Also, the preferably used resin component has low compatibility with the resin component for forming microfine fibers, and has, under spinning conditions, a lower melt viscosity or surface tension than the resin component for forming the microfine fibers. Specific examples of such a resin component include, for instance, polyethylene, polystyrene, polyethylene propylene copolymers, modified polyesters, polyvinyl alcohol and the like. Polyvinyl alcohol is preferred among the foregoing on account of its low environmental load, since it can be removed with hot water, without using organic solvents.

For instance, the weight ratio of sea component to island component in the sea-island type microfine fiber-forming fibers ranges preferably from 1:3 to 3:1.

Although not particularly limited thereto, the method used for spinning the microfine fiber-forming fibers may be, for instance, a known conventional melt spinning method for forming composite fibers. In a specific example, for instance, the melt spinning method may involve discharging simultaneously a plurality of molten resins, having dissimilar components, from a plurality of respective spinnerets: compounding the discharged resins from a plurality of spinnerets, in a molten state; and cooling then the resulting composite under drawing. The melt-spun undrawn fibers are ordinarily subjected to post-processing, for instance oiling, drawing, crimping and the like.

Fibrillated microfine fibers are obtained by subjecting the sea-island type fibers to a microfine fiber-formation process, such as a process of removing only one resin component of the sea-island type fibers by dissolving in a predetermined solvent, or removing the only one resin component through disaggregation in a predetermined disaggregating liquid.

As a specific example of a method for manufacturing the entangled nonwoven fabric comprising the sea-island type fibers, a method for manufacturing an entangled nonwoven fabric using staples (short-fibers) will be explained next. Firstly, the melt-spun microfine fiber-forming fibers are drawn to a drawing ratio of about 1.5 to 5, and are then mechanically crimped and cut to about 30 to 70 mm, to yield staples. The staples thus obtained are opened through carding, to form a web. Webs are then piled into a plurality of plies by way of a webber, up to a desired basis weight. The webs are punched by needle punching, at about 300 to 4000 punch/cm². using a needle having one or a plurality of barbs, to form thereby a nonwoven fabric in which the microfine fiber-forming fibers are three-dimensionally entangled in the thickness direction.

The microfine fiber formation process may be carried out immediately after formation of the microfine fiber-forming fibers, immediately after formation of the webs of the microfine fiber-forming fibers, or immediately after the formation of the entangled nonwoven fabric through three-dimensional entangling of the webs. The microfine fiber formation process may be carried out, without any particular restriction, also immediately after formation of the composite body of the entangled nonwoven fabric and the polymeric elastomer.

In addition to the sea-island type, the microfine fiber-forming fibers used may be microfine fiber-forming fibers of known multilayer-stack type, petaloid-stack type or the like. Specifically, for instance, fibers of petaloid-stack type or fibers of multilayer-stack type, formed from two or more incompatible thermoplastic polymers, are subjected to a physical treatment to cause the dissimilar polymers to segregate from each other at the interface, to yield microfine fibers. Alternatively, in the fibers of multilayer-stack type formed from two or more incompatible thermoplastic polymers, any of the stacked component polymers are removed by being dissolved, or by being disaggregated, to yield microfine fibers that comprise the remaining polymer component.

The fineness of the microfine fibers ranges preferably from 0.0001 to 0.5 dtex, and more preferably from 0.001 to 0.1 dtex. Such microfine fibers are low-stiffness, supple fibers. As a result there is obtained a split leather product having a leather-like supple texture. Excellent appearance and touch are also obtained in the case of a nap-finished split leather product obtained through surface napping. Too high the fineness tends to give rise to a harder texture.

As the case may require, the microfine fibers are preferably subjected to a softening treatment, using for instance softeners that are employed in a known fiber processing. Such a softening treatment affords a more supple fiber texture, which results in the split leather product having a supple texture.

An explanation follows next on a method for compounding the polymeric elastomer and the entangled nonwoven fabric comprising the microfine fibers.

The method for compounding the entangled nonwoven fabric and the polymeric elastomer may be, for instance, a method in which there is formed a composite body of the polymeric elastomer and the entangled nonwoven fabric comprising the microfine fiber-forming fibers, after which the microfine fiber-forming fibers are subjected to the microfine fiber formation process; or a method in which the entangled nonwoven fabric comprising the microfine fiber-forming fibers is subjected beforehand to the microfine fiber formation process, to form thereby an entangled nonwoven fabric comprising the microfine fibers, after which there is formed a composite body of the polymeric elastomer and the obtained entangled nonwoven fabric comprising the microfine fibers.

As an example of the method for compounding the entangled nonwoven fabric and the polymeric elastomer, the embodiment is explained in detail next in which a polyurethane elastomer is used as the polymeric elastomer, and sea-island type fibers are used as the microfine fiber-forming fibers. In a wet method, the entangled nonwoven fabric formed from the sea-island type fibers is dipped into the polyurethane elastomer solution, after which the polyurethane elastomer is coagulated in a coagulation bath. In a dry method, the entangled nonwoven fabric formed from the sea-island type fibers is impregnated with an aqueous dispersion or emulsion of the polyurethane elastomer, followed by drying to coagulate the polyurethane elastomer. The polyurethane elastomer solution is a solution of the polyurethane elastomer starting material in an organic solvent. The aqueous dispersion of the polyurethane elastomer is obtained by suspending and dispersing the polyurethane resin in an aqueous medium. The polyurethane elastomer emulsion is obtained by emulsifying and dispersing the polyurethane elastomer in an aqueous medium. The aqueous dispersion or emulsion of the polyurethane elastomer is preferred among the foregoing, in terms of reducing environmental load, since no organic solvent is used.

Examples of the polyurethane elastomer include, for instance, various polyurethane elastomers that are obtained through reaction of organic diisocyanates, polymer diols having an average molecular weight of 500 to 3000, and chain extenders, in predetermined mole ratios.

Specific examples of polymer diols having an average molecular weight of 500 to 3000 include, for instance, polyester diols, polyether diols, polyester ether diols, polylactone diols, polycarbonate diols and the like. Examples of organic diisocyanates include, for instance, at least one diisocyanate selected from among organic diisocyanates such as aromatic isocyanates, for instance tolylene diisocyanate, xylylene diisocyanate, phenylene diisocyanate, 4,4'-diphenylmethane diisocyanate or the like; alicyclic isocyanates, for instance 4,4-dicyclohexylmethane diisocyanate, isophorone diisocyanate or the like; and aliphatic isocyanates, for instance hexamethylene diisocyanate or the like. Examples of chain extenders include, for instance, low-molecular compounds having at least two active hydrogen atoms, for instance diols, diamines, hydroxylamines, hydrazines, hydrazides or the like. The foregoing can be used singly or in combinations of two or more.

As the case may require, the polyurethane elastomer may be a mixture of various polyurethane elastomers, or may be a resin composition to which there is added a synthetic rubber, a polyester elastomer, or a polymer such as polyvinyl chloride or the like.

When resorting to the wet method using the polyurethane elastomer solution, the solution may be impregnated into the entangled nonwoven fabric comprising sea-island type fibers or the entangled nonwoven fabric comprising microfine fibers, followed by dipping in a coagulation bath containing a poor solvent towards the polyurethane elastomer, to elicit thereby coagulation of the polyurethane elastomer.

The solvent of the polyurethane elastomer solution is not particularly limited, so long as it can dissolve the polyurethane elastomer. Specifically, for instance, dimethylformamide (DMF) is preferably used, as it allows forming an appropriate porous structure in the polyurethane elastomer obtained by the wet method.

The concentration of the polyurethane elastomer solution ranges, on solids basis, preferably from 5 to 40 wt%, more preferably from 10 to 30 wt%, in terms of obtaining an appropriate solution viscosity.

To the polyurethane elastomer solution or the like, there may further be added, as the case may require, additives such as coloring agents, light-fastness agents, dispersants or the like, as well as coagulation regulators or the like for controlling the shape of the porous structure.

The method for impregnating the polyurethane elastomer solution or the like into the entangled nonwoven fabric may be a known impregnation method, for instance coating, dipping or the like.

The entangled nonwoven fabric, impregnated with the polyurethane elastomer solution, is dipped into the coagulation bath, as the result of which the polyurethane elastomer coagulates to form the composite body of the entangled nonwoven fabric and the polyurethane elastomer.

As the coagulation bath, there is preferably used a mixture of DMF which is a good solvent towards the polyurethane elastomer, and water which is a poor solvent towards the polyurethane elastomer, so that, for instance, the number of the gaps formed in the polyurethane elastomer can be controlled by adjusting the mixing ratio of the two solvents.

The mixing ratio of good solvent /poor solvent in the coagulation bath ranges preferably from good solvent /poor solvent =0/100 to 50/50 (weight ratio). The temperature of the coagulation bath is preferably not higher than 50°C, more preferably not higher than 40°C. The pore size of the porous structure of the polyurethane elastomer tends to decrease, and texture to worsen, when the ratio of good solvent in the coagulation bath is excessively high and/or when the temperature of the coagulation bath is too high.

After formation of the composite body of the polyurethane elastomer and the entangled nonwoven fabric comprising the sea-island type fibers, the sea-island type fibers are subjected to the microfine fiber formation process, to yield thereby the composite body of the polyurethane elastomer and the entangled nonwoven fabric formed from microfine fibers.

In the case where the sea-island type fibers are subjected to the microfine fiber formation process after formation of the composite body of the polyurethane elastomer and the entangled nonwoven fabric formed from the sea-island type fibers, the sea component is removed to form thereby gaps between the microfine fibers and the polyurethane elastomer. These gaps weaken the constraining action of the polymeric elastomer on the microfine fibers, as a result of which there is achieved a supple texture on the surface layer of the obtained split leather product.

In the case of a dry method using an aqueous dispersion or emulsion of the polyurethane elastomer, the aqueous dispersion or emulsion of the polyurethane elastomer is impregnated into the entangled nonwoven fabric formed by the sea-island type fibers, followed by heating and drying, to form a composite body of the polyurethane elastomer and the entangled nonwoven fabric formed of the sea-island type fibers. As in the case of the wet method, the microfine fiber formation process is carried out to yield the composite body of the polymeric elastomer and the entangled nonwoven fabric formed from microfine fibers.

The content ratio of the polymeric elastomer in the obtained composite body of the polymeric elastomer and the entangled nonwoven fabric formed from microfine fibers ranges preferably from 5 to 70 wt%, more preferably from 10 to 60 wt%, and yet more preferably from 10 to 50 wt%.

Thus, as described above, the composite body of the polymeric elastomer and the entangled nonwoven fabric for forming the skin layer is obtained.

An explanation follows next on a method for bonding the skin layer to the surface of the base material comprising the split leather.

The skin layer and the base material comprising the split leather are bonded to each other, for instance, using an adhesive. Specifically, the adhesive is coated on one face of the split leather, in accordance with a known method, for instance roll coating, slit coating or flow coating, and then the skin layer is overlaid thereon, and is bonded by pressure-bonding. Bonding can be carried out with higher bonding strength, as the case may require, by applying pressure during bonding, using a hot press.

The adhesive used is, for instance, a polyurethane resin adhesive, an acrylic resin adhesive or a polyurethane-acrylic composite resin adhesive.

In case of coating the adhesive, in order to prevent hardening of the split leather through excessive penetration of the adhesive into the split leather, a base coat layer having a thickness of about 1 to 20 µm and formed from, for instance, a polyurethane-acrylic composite resin or a polyurethane resin, is preferably formed beforehand on the adhesion face of the split leather, in accordance with a known coating method, and using a known resin that does not impair adherence towards the above-mentioned adhesive.

Thus, as described above, the skin-layer split leather having the skin layer formed thereon is thus obtained.

The split leather product of the present embodiment may be embellished by laminating a resin layer on the skin layer surface or by napping the skin layer, after which the skin layer is bonded to the base material. Alternatively, for embellishing the split leather product, the skin layer may be bonded to the base material, after which the resin layer is laminated on the skin layer surface, or the skin layer is napped.

Next, an explanation follows on a method for forming a resin layer on the skin layer of the skin-layer split leather in order to obtain the grain-finished split leather product.

The method for forming the resin layer on the skin layer may be a method that involves coating a resin solution on the skin layer, followed by drying; a method that involves bonding the resin layer, prepared beforehand, on the skin layer; or a method of, after overlaying a nonwoven fabric comprising polyurethane elastomer fibers on the surface of the skin layer, bonding the resin component that forms the nonwoven fabric, in the form of a film, through melting of the resin component by heat pressing.

The resin component that forms the resin layer may be, for instance, a polyurethane elastomer, an acrylic elastomer or a polyurethane-acrylic composite elastomer. Polyurethane elastomers are preferred among the foregoing, in terms of imparting a leather-like texture.

The method for coating the resin solution on the surface of the skin layer may be, for instance, a dry or wet method that involves coating a polyurethane elastomer solution or polyurethane elastomer aqueous dispersion, using a knife coater, a bar coater or a roll coater, on the surface of the skin layer, to a predetermined thickness. A wet method may involve, for instance, coating the polyurethane elastomer solution on the base material surface, with subsequent dipping into a coagulation bath that contains a poor solvent to coagulate thereby the polyurethane elastomer into a porous state, followed by drying.

A preferred bonding method involves coating an adhesive on the surface of the skin layer and overlaying thereon a nonwoven fabric, or overlying the nonwoven fabric without applying any adhesive, after which the resin component that forms the nonwoven fabric is melted by hot pressing to form a film. This is because, in such a method, small holes derived from the gaps in the nonwoven fabric are left in the formed film, as a result of which the resin layer can be imparted moisture permeability.

As the nonwoven fabric for forming the resin layer, a nonwoven fabric comprising polyurethane elastomer fibers is preferable in terms of imparting a leather-like texture to the obtained split leather product.

The method for manufacturing the nonwoven fabric formed from polyurethane elastomer fibers is not particularly limited. In terms of nonwoven fabric formability there is preferably used a nonwoven fabric that is obtained by melt blowing using a polyurethane elastomer.

The thickness of the nonwoven fabric for forming the resin layer ranges preferably from 0.015 to 0.24 mm, more preferably from 0.03 to 0.15 mm. In terms of nonwoven fabric homogeneity, the fiber fineness of the nonwoven fabric is preferably no greater than 4 dtex, more preferably no greater than 2 dtex.

From the viewpoint of nonwoven fabric homogeneity, the basis weight of the nonwoven fabric for forming the resin layer ranges preferably from 5 to 80 g/m², more preferably from 10 to 50 g/m².

The nonwoven fabric for forming the resin layer is overlaid on the surface of the skin layer, and then is melted and bonded in the form of a film through heating pressing. Preferably, an integral laminate is formed by heat pressing using a pressing plate having an embossed pattern formed thereon, at a temperature about 20°C to 80°C higher than the softening point of the resin component, and at a pressure of 0.5 to 7.0 kg/cm². Bonding strength is insufficient when the heating press temperature is too low, while moisture permeability is likely to be insufficient if the heating press temperature is too high, since pores are fewer in that case. Bonding strength is insufficient also when the heating press pressure is too low, while texture tends to be harder if the heating press pressure is too high.

Preferably, the surface of the skin layer is coated with a polyurethane elastomer solution before overlaying the nonwoven fabric formed of polyurethane elastomer fibers on the surface of the skin layer. Such coating beforehand the surface of the skin layer with the polyurethane elastomer solution results in better compatibility between the skin layer and the nonwoven fabric, leading into higher bonding strength.

As the case may require, a wet tumbling treatment in a drum dyeing machine may be carried out before or after bonding the skin layer with the split leather. Color and embossed patterns may be imparted to the resin layer in accordance with known methods.

The grain-finished split leather product thus obtained may be tumbled, as the case may require, in order to soften the texture. The tumbling process may involve tumbling for a predetermined lapse of time, at a predetermined temperature, using a drum dyeing machine, as a typical tumbling-type dyeing machine that is used conventionally in the field of leather manufacture. The tumbling process may be performed on the obtained split leather product, or may be carried out before bonding between the base material and the skin layer.

Next, an explanation follows on a method for obtaining a nap-finished split leather product.

The napping process is performed on the skin layer surface before or after bonding between the skin layer and the base material. Specifically, the surface of the skin layer that is the composite of the polymeric elastomer and the entangled nonwoven fabric comprising microfine fibers is subjected to the napping process by way of a known nap raising method that involves napping using a carding cloth, or buffing using sandpaper or the like. The skin layer thus napped may be further subjected, as the case may require, to a combing process for uniformizing the nap. Thus, a skin layer in which the microfine fibers present on the surface layer of the skin layer are napped is obtained as described above.

The obtained skin layer may be dyed, as the case may require. The type of dye and dyeing equipment, as well as the dyeing conditions and so forth, are not particularly limited. In a case where the microfine fibers that make up the entangled nonwoven fabric are mainly polyamide fibers, the skin layer can by dyed by using, for instance, an acid dye, in a circular dyeing machine, at a water temperature of 90°C or higher, for 1 to 2 hours.

The split leather product of the present embodiment having the napped surface can be formed thus as described above.

The obtained nap-finished split leather product may be tumbled, as the case may require, in order to soften the texture. The tumbling process may involve tumbling for a predetermined lapse of time at a predetermined temperature, using a drum dyeing machine, such as a tumbling-type dyeing machine, that is used conventionally in the field of leather manufacture.

In an industrial process for producing conventional suede-finished artificial leather, a rolled fiber sheet for forming the entangled nonwoven fabric that comprises microfine fibers is fed in one direction and subjected to the microfine fiber formation process, the polymeric elastomer impregnation process and so forth consecutively. In such continuous production, tension acts in the advance direction of the fiber sheet (product longitudinal direction), so that the sheet stretches readily in that direction, while tension hardly acts on the direction perpendicular to the advance direction (product transversal direction), so that the sheet shrinks readily in this latter direction. Therefore, the suede-finished artificial leather was characterized by exhibiting high anisotropy in the longitudinal and transversal directions. Specifically, the suede-finished artificial leather is stretched in the longitudinal direction and shrinks in the transversal direction during manufacture, as a result of which the suede-finished artificial leather has characteristics that become higher in strength and harder to stretch in the product longitudinal direction, but lower in strength and easier to stretch in the product transversal direction. This was problematic in terms of the high residual anisotropy in the mechanical characteristics of the product. Split leather is derived from an animal, and hence the mechanical characteristics thereof exhibit significant variability depending on the part of the animal.

The split leather product of the present embodiment is preferably used as a leather-like material in various applications where full grain leather or napped leather are employed, specifically, for instance, in apparel, footwear, bags, miscellaneous goods, furniture, vehicle interiors and the like.

### Examples

The present invention will be explained in detail below on the basis of examples. The present invention, however, is not limited to these examples.

Examples 1 to 5 and Comparative examples 1 and 2 relate to a grain-finished split leather product. Examples 6 to 8 and Comparative examples 3 and 4 relate to a nap-finished split leather product.

The evaluation methods employed in the examples are explained first.

### (Convex bend evaluation)

A split leather product cut to a 200×200 mm square was bent convexly so that the top and bottom edges touched each other. The resulting bent shape was observed visually. The bent shape was evaluated by comparing with the bent shape that is formed when cowskin leather (full grain leather or suede) having the same thickness is bent in the same manner, based on the following criteria.
Excellent: a rounded bent shape was obtained identical to that of cowskin leather.
Poor: the obtained bent shape exhibited a distinctly sharper angle than that of cowskin leather.

### (Concave bend evaluation)

A split leather product cut to a 200×200 mm square was bent concavely so that the top and bottom edges touched each other. The resulting bent shape was observed visually. The evaluation was based on the following criteria.
Excellent: fine, uniform bending wrinkles on the bent surface, identical to those of cowskin leather.
Poor: coarse bending wrinkles on the bent surface, similar to those of bent cardboard.

### (Occurrence of roughening)

Roughening was evaluated in accordance with JIS K 6546-1995: "Testing method for set in lasting with the dome plasticity apparatus". Specifically, a 9 cm-diameter circular sample of a split leather product was cut out. A 25 mm reference line was drawn along substantially the center of the surface of the sample. The sample was set, with the surface layer side thereof facing up, on a dome plasticity tester. The sample was drawn in until the reference line stretched to 30 mm, whereupon the occurrence of roughening (surface irregularities) was evaluated according to the grades below. Excellent: no roughening occurred at all.
Good: slight fine irregularities on the surface.
Poor: numerous irregularities on the surface.

### (Flame retardancy)

The obtained split leather product was subjected to a flammability test in accordance with FMVSS (Federal Motor Vehecle Safety Standard) 302 (Flammability of Automotive Interior Materials). In FMVSS 302, the edge of a sheet held horizontally is exposed to a flame for 15 seconds, and then the rate of flame spread is measured. Specifically, after the burning reaches a reference line 38 mm away from the edge, the rate of further flame spread is measured. Flame retardancy was evaluated into the three grades below.
Self-extinguishing: the flame extinguishes within 50 mm from the reference line and within 60 seconds.
Slow-flammable: burning rate no greater than 100 mm/min
Fast-flammable: burning rate exceeds 100 mm/min

### (Texture)

The texture of the split leather product when held in the hands was compared to that of cowskin leather comprising a 1.5 mm skin layer, and was evaluated according to the grades below.
Excellent: supple texture comparable to that of cowskin leather, with the surface also having a supple texture comparable to that of cowskin leather.
Good: supple texture comparable to that of cowskin leather, with a surface texture slightly harder than that of cowskin leather.
Ordinary: slightly harder texture than that of cowskin leather.
Poor: significantly harder than cowskin leather.

### (Napped surface appearance)

The napped surface was observed visually and was compared to the napped surface of suede from cowhide comprising a skin layer. The appearance was evaluated according to the grades below.
Excellent: no great difference vis-à-vis natural suede from cowhide, uniform nap.
Poor: inferior nap fineness as compared to natural suede from cowhide; non-uniform nap, with irregular surface feel.

### (Tensile characteristics)

The tensile strength at break, tensile strength at 20% elongation and tensile elongation were measured in accordance with JIS-L1096-1964 "Tensile testing methods for woven fabrics". The measurements were carried out respectively in the longitudinal and transversal directions, the longitudinal direction being the flow direction during processing of the entangled nonwoven fabric, and the transversal direction being a direction perpendicular to the flow direction during processing of the entangled nonwoven fabric. The measurement conditions involved an atmosphere at a temperature of 23°C and humidity of 65%.

### (Tear strength)

Tear strength was measured in accordance with JIS-L1096-1964 "Tensile testing methods for woven fabrics". The measurement was carried out in the longitudinal and transversal directions. The measurement conditions involved an atmosphere at a temperature of 23°C and humidity of 65%.

### Example 1

Sea-island type mix-spun fibers comprising polyethylene terephthalate (PET) resin (island component) and polyethylene (sea component) in a weight ratio of 50/50 were melt-spun. The obtained fibers were drawn, crimped and cut to yield staples having a fineness of 4 dtex and a cut length of 51 mm.

The obtained staples were carded to manufacture webs that were then stacked to a predetermined number of plies by way of a cross lapper. An entangled nonwoven fabric comprising sea-island type fibers was obtained next through needle-punching of the overlaid webs using a felting needle.

The obtained entangled nonwoven fabric was then shrunk in warm water and was dried, after which it was hot-pressed to yield a surface-smoothed entangled nonwoven fabric having a thickness of 2.2 mm and a basis weight of 500 g/m². A polycarbonate-polyurethane DMF solution (solids 13%) was impregnated into the surface-smoothed entangled nonwoven fabric. The entangled nonwoven fabric impregnated with the above solution was dipped into a DMF 30% aqueous solution at a temperature of 40°C, to yield a composite of polyurethane and the entangled nonwoven fabric comprising sea-island type fibers in which the polyurethane had coagulated into a sponge shape. The composite body was washed with hot water, and then the polyethylene in the sea-island type fibers was removed through dissolution and extraction in hot toluene, to yield a skin layer precursor comprising a composite body of an entangled nonwoven fabric formed of about 1100 PET fiber bundles having a single-fiber fineness of about 0.0018 dtex, and porous polyurethane present within the entangled nonwoven fabric. The obtained skin layer precursor was a composite body having a thickness of 1.2 mm, a density of 0.4 g/cm³, a polyurethane content proportion of 40 wt%, and a basis weight of 480 g/m².

The skin layer precursor was sliced in two, and both faces of one slice were buffed to adjust the thickness of the slice to about 0.5 mm. The slice adjusted to a thickness of 0.5 mm was dyed black. The dye used was a black dye (Harmony Light Black TK-5, by Hokuriku Color), liquor ratio 1:30, dye concentration 5% owf, dyeing temperature 130°C, dyeing time 60 minutes.

The dyed slice was washed with water and dried, was soaked into a solution of a fiber processing agent, was strained to a strained liquor ratio of 60%, and was then dried, to yield a black dyed skin layer. The solution of a fiber processing agent solution was a solution of 15 parts by weight of Lustex LB (softener, by Daikyo Kagaku) and 5 parts by weight of Nicca Silicone AM-204 (softener, by Nicca Chemical) in 47.5 parts by weight of water.

The surface of the obtained skin layer was coated, to 30 g/m² wet, by gravure coating, with a DMF solution (solids 10%) of polycarbonate-polyurethane (TC-4020, by Dainichiseika Color & Chemicals Mfg.). A nonwoven fabric, having a basis weight of 45 g/m² and obtained by melt blowing of a polycarbonate-polyurethane (Resamine P-890, by Dainichiseika Color & Chemicals Mfg., softening point 160 to 200°C), was overlaid on and pre-bonded to the gravure-coated surface. The nonwoven fabric was then made into a film by hot pressing. The hot pressing conditions included a press temperature of 160°C, a pressing pressure of 4 kg/cm² and a press time of 10 seconds.

Next, a transparent polycarbonate-polyurethane DMF solution (solids 10%) was gravure-coated, to 20 g/m² wet, on the surface of the bonded polycarbonate-polyurethane made into a film, followed by hot pressing at a surface temperature of 145°C using a satin finish-type embossing roll. Gravure coating under a 150 mesh, using black ink, was repeated then 5 times, with a further one-time gravure coating using a transparent ink to form a transparent layer. This was followed by embossing using a kipskin-finish embossing roll. The resulting product was tumbled for 60 minutes at 50°C in a drum-type dyeing machine, and was dried in a tumbler dryer. Thereafter, a polycarbonate-polyurethane resin solution was spray-coated on the surface on the side of the transparent layer, to form a 15 µm-thick topcoat layer. Thus, a skin layer with resin layer, on the surface of which there was formed a resin layer about 70 µm thick, was obtained.

Meanwhile, the surface of split leather about 1 mm thick, derived from cowhide, was coated with a 7 µm polyurethane acrylic resin, to form a base coat layer. The base coat layer surface was spray-coated with a polyurethane acrylic adhesive (Binder UB-30-AD, by DIC), and was then pressure-bonded, using a hot press, to the bonding face of the skin layer-side surface of the skin layer with resin layer. The hot pressing conditions included a press temperature of 40°C, a pressing pressure of 50 kg/cm² and a press time of 3 seconds. The obtained split leather product had a thickness of 1.71 mm, the split leather (base material) had a thickness of 1.06 mm, the skin layer had a thickness 0.58 mm (including 0.08 mm of adhesive layer) and the resin layer (layer portion above the skin layer) had a thickness of 0.07 mm. The obtained split leather product was evaluated in accordance with the above-described evaluation methods. The results are given in Table 1.

### Example 2

A split leather product was obtained in the same way as in Example 1, but using herein a skin layer having a thickness of about 0.2 mm, obtained through thinner slicing, in place of the skin layer about 0.5 mm thick. The obtained split leather product had a thickness of 1.29 mm, the split leather had a thickness of 1.02 mm, the skin layer had a thickness of 0.2 mm (including 0.08 mm of adhesive layer), and the resin layer had a thickness of 0.07 mm. The obtained split leather product was evaluated in accordance with the above-described evaluation methods. The results are given in Table 1.

### Example 3

A split leather product was obtained in the same way as in Example 1, but using herein a polycarbonate-polyurethane nonwoven fabric dyed beforehand, instead of by coloring the surface of the bonded polycarbonate-polyurethane made into a film, by gravure coating. The obtained split leather product had a thickness of 1.63 mm, the split leather had a thickness of 1.02 mm, the skin layer had a thickness of 0.58 mm and the resin layer had a thickness of 0.03 mm. The obtained split leather product was evaluated in accordance with the above-described evaluation methods. The results are given in Table 1.

### Example 4

The base coat layer surface of split leather was roll-coated with a polyurethane acrylic adhesive, and then a skin layer about 0.5 mm thick was bonded thereto, as in Example 1.

The surface of the skin layer formed on the split leather surface was coated next with a polycarbonate-polyurethane aqueous dispersion (solids 30%), to 60 g/m² wet, followed by drying. The surface was further coated with an aqueous suspension (Hydran ULK203, by DIC, solids 30 wt%) of polycarbonate-polyurethane containing 10% of a black colorant, adjusted so as to yield a dry thickness of 20 µm, followed by drying to obtain a polycarbonate-polyurethane colored layer. The surface of the layer was gravure-coated with a transparent polycarbonate-polyurethane DMF solution (solids 10%, TC-4020, by Dainichiseika Color & Chemicals Mfg.) to 20 g/m² wet, followed by embossing using a kipskin-finish embossing roll at a surface temperature of 145°C. The product was tumbled for 60 minutes at 50°C in a drum-type dyeing machine, and was dried in a tumbler dryer. Thereafter, a polycarbonate-polyurethane resin solution was spray-coated on the surface, to form a topcoat layer having a thickness of 15 µm, and thus, a split leather product having a surface layer with a resin layer was obtained. The obtained split leather product had a thickness of 1.69 mm, the split leather had a thickness of 1.06 mm, the skin layer had a thickness of 0.58 mm (including 0.08 mm of adhesive layer), and the resin layer (layer portion above the skin layer) had a thickness of 0.05 mm. The obtained split leather product was evaluated in accordance with the above-described evaluation methods. The results are given in Table 1.

### Example 5

Sea-island type mix-spun fibers, having a 6-nylon resin (island component) and polyethylene (sea component) at a weight ratio of 50/50, were melt-spun. The obtained fibers were drawn, crimped and cut to yield staples having a fineness of 15 dtex and a cut length of 51 mm.

The obtained staples were carded to manufacture webs, that were then stacked to a predetermined number of plies by way of a cross lapper. An entangled nonwoven fabric comprising sea-island type fibers was obtained next through needle-punching of the overlaid webs using a felting needle.

The obtained entangled nonwoven fabric was hot-pressed to yield a surface-smoothed entangled nonwoven fabric having a thickness of 2.2 mm and a basis weight of 500 g/m². A polycarbonate-polyurethane DMF solution (solids 13%) was impregnated into the surface-smoothed entangled nonwoven fabric. The entangled nonwoven fabric impregnated with the above solution was dipped into a DMF 30% aqueous solution at a temperature of 40°C, to yield a composite of polyurethane and the entangled nonwoven fabric comprising sea-island type fibers in which the polyurethane had coagulated into a sponge shape. The composite body was washed with hot water, and then the polyethylene in the sea-island type fibers was removed through dissolution and extraction in hot toluene, to yield a skin layer precursor comprising a composite body of an entangled nonwoven fabric formed of about 300 6-nylon fiber bundles having a single-fiber fineness of about 0.006 dtex, and porous polyurethane present in the interior of the entangled nonwoven fabric. The obtained skin layer precursor was a composite body having a thickness of 1.2 mm, a density of 0.4 g/cm³ a polyurethane content proportion of 40 wt%, and a basis weight of 480 g/m².

The skin layer precursor was sliced in two, and both faces of one slice were buffed to adjust the thickness of the slice to about 0.5 mm. The dye used was a black dye (Kayakalan Black 2RL, by Nippon Kayaku), liquor ratio 1:30, dye concentration 5% owf, dyeing temperature 90°C, dyeing time 60 minutes

The same method as in Example 1 was carried out, from the softening treatment onwards, to obtain a skin layer with resin layer, which was then bonded to split leather from cowhide, to yield a split leather product. The obtained split leather product had a thickness of 1.71 mm, the split leather (base material) had a thickness of 1.06 mm, the skin layer had a thickness 0.58 mm (including 0.08 mm of adhesive layer) and the resin layer (layer portion above the skin layer) had a thickness of 0.07 mm. The obtained split leather product was evaluated in accordance with the above-described evaluation methods. The results are given in Table 1.

### Comparative example 1

The surface of an embossed release paper, embossed to a kipskin-finish pattern, was coated, using a comma coater, with a DMF/toluene/isopropyl alcohol solution (solids 11%, black pigment 15%) of a polycarbonate-polyurethane (NY-324, by DIC), followed by drying at 70°C to form a resin layer having a thickness of 30 µm. The resin layer was further coated, using a comma coater, with the same resin, to form an 40 µm-thick interlayer, upon which there was further coated, using a comma coater, a DMF/methyl ethyl ketone solution (solids 12%) of a polycarbonate-polyurethane (TA-208, by DIC), as an adhesive, to a thickness of 30 µm after drying. The whole was semi-dried at 70°C and, in a semiwet state, was bonded to the similar split leather having a thickness of about 1 mm as in Example 1 but without using herein the surface layer of Example 1, to yield a split leather product having a 0.1 mm-thick resin layer. The obtained split leather product was evaluated in accordance with the above-described evaluation methods. The results are given in Table 1.

### Comparative example 2

A split leather product was obtained in accordance with the same method as in Comparative example 1, but with the thickness of the resin layer being half that in Comparative example 1. The obtained split leather product had a thickness of 1.11 mm, the split leather portion had a thickness of 1.06 mm, and the resin layer had a thickness of 0.05 mm. The obtained split leather product was evaluated in accordance with the above-described evaluation methods. The results are given in Table 1.

**Table 1**

| Example No. | Example 1 | Example 2 | Example 3 | Example 4 | Example 5 | Comparative example 1 | Comparative example 2 |
|---|---|---|---|---|---|---|---|
| Base material thickness (mm) | 1.06 | 1.02 | 1.02 | 1.06 | 1.06 | 1.06 | 1.06 |
| Skin layer thickness (mm) | 0.58 | 0.2 | 0.58 | 0.58 | 0.58 | - | - |
| Resin layer thickness (mm) | 0.07 | 0.07 | 0.03 | 0.05 | 0.07 | 0.1 | 0.05 |
| Product thickness (mm) | 1.71 | 1.29 | 1.63 | 1.69 | 1.71 | 1.16 | 1.11 |
| Basis weight (g/m²) | 1348 | 939 | 1309 | 1360 | 1298 | 737 | 729 |
| Base material thickness proportion (%) | 62.0 | 79.1 | 62.6 | 62.7 | 62.0 | 91.4 | 95.5 |
| Resin layer thickness/skin layer thickness | 0.12 | 0.35 | 0.05 | 0.09 | 0.12 | - | - |
| Concave bending evaluation | Excellent | Excellent | Excellent | Excellent | Excellent | Poor | Poor |
| Roughening occurrence | Excellent | Excellent | Excellent | Excellent | Excellent | Good | Poor |
| Texture | Excellent | Good | Excellent | Excellent | Excellent | Poor | Ordinary |
| Tensile strength at break (longitudinal, kg/=15mm) | 99.0 | 69.0 | 95.1 | 98.0 | 117.0 | 48.2 | 45.0 |
| Tensile strength at break (transversal, kg/25mm) | 71.5 | 49.8 | 68.0 | 75.1 | 90.0 | 31.4 | 30.5 |
| Tensile elongation at break | 57.0 | 58.0 | 57.0 | 56.0 | 55.0 | 56.0 | 57.0 |
| (longitudinal, %) Tensile elongation at break (transversal, %) | 51.0 | 50.0 | 50.0 | 52.0 | 49.0 | 42.0 | 51.0 |
| Tensile strength at 20% elongation (longitudinal, kg/25mm) | 22.1 | 16.1 | 20.4 | 22.5 | 27.6 | 11.2 | 10.8 |
| Tensile strength at 200 elongation (transversal, kg/25mm) | 21.4 | 15.9 | 19_{.}5 | 22.3 | 27.0 | 10.5 | 9.0 |
| Tear strength (longitudinal, kg/25mm) | 13.6 | 9.5 | 12.5 | 13.4 | 15.6 | 9.2 | 9.1 |
| Tear strength (transversal. kg/25mm) | 13.7 | 9.9 | 12.9 | 13.5 | 15.9 | 8.2 | 8.5 |

The results in Examples 1 to 5 and Comparative examples 1 and 2 show that the split leather product according to the present invention exhibited minute uniform bending wrinkles upon concave bending of the-graln side, like those observed in full grain leather. No roughening was observed in the split leather products of Examples 1 to 5. These split leather products exhibited also little mechanical characteristic anisotropy. The split leather product of Example 2, having a thin skin layer and a high resin layer ratio, exhibited a somewhat hard surface texture. The split leather products obtained in Comparative examples 1 and 2 according to conventional methods exhibited coarse bending wrinkles when bent concavely.

### Example 6

Sea-island type composite fibers were melt-spun, wherein the fibers comprise a PET resin as the island component and low-density polyethylene (PE) as the sea component at a weight ratio of 40/60 and the number of islands is 16. The obtained fibers were drawn, crimped and cut to yield staples having a fineness of 4 dtex and a cut length of 51 mm. The obtained staples were carded to manufacture webs, that were then stacked to a predetermined number of plies by way of a cross lapper. An entangled nonwoven fabric having a basis weight of 663 g/m² and comprising sea-island type fibers was obtained next through needle-punching of the overlaid webs using a felting needle.

The obtained entangled nonwoven fabric was then shrunk in warm water, was dried, and was hot-pressed to yield a surface-smoothed entangled nonwoven fabric having a thickness of 1.98 mm, a basis weight of 950 g/m² and a density of 0.480 g/cm³. The surface-smoothed entangled nonwoven fabric was impregnated with a polyether-polyurethane DMF solution (solids 13%), so as to yield 20 wt% solids in the skin layer. The polyether-polyurethane was wet-coagulated using a DMF aqueous solution, and was then washed with water. The sea-component polyethylene was removed through dissolution and extraction in hot toluene of 85°C, to yield a skin layer precursor comprising a composite body of an entangled nonwoven fabric formed of about 16 PET fiber bundles having an average single-fiber fineness of about 0.2 dtex, and porous polyurethane elastomer present in the interior of the entangled nonwoven fabric. The obtained skin layer precursor was a composite body having a thickness of 1.55 mm, a density of 0.449 g/cm³, a polyurethane content proportion of 20 wt%, and a basis weight of 696 g/m².

The skin layer precursor was sliced in two, and both faces of one slice were adjusted by buffing to a thickness of 0.75 mm using #400 sandpaper. The face that becomes the outermost surface was further subjected to a napping process. As a result there was obtained a skin layer A wherein the microfine fibers present on the surface was napped.

The skin layer A was dyed black. The dye used was a black dye (Harmony Light Black TK-5, by Hokuriku Color), liquor ratio 1:30, dye concentration 10% owf, dye temperature 130°C, dyeing time 60 minutes. The skin layer A is then washed and dried. The skin layer A was soaked into a solution of a fiber processing agent, was strained to a strained liquor ratio of 60%, and was then dried. The fiber processing agent solution was a solution of 15 parts by weight of Lustex LB (softener, by Daikyo Kagaku) and 5 parts by weight of Nicca Silicone AM-204 (softener, by Nicca Chemical) dissolved in 47.5 parts by weight of water.

Meanwhile, the surface of split leather from cowhide (density 0.672 g/cm³) having a thickness of about 0.9 mm was spray-coated with a polyurethane acrylic adhesive (Binder UB-30-AD, by DIC), and was then pressure-bonded, using a hot press to the bonding face of the skin layer-side surface of the skin layer with resin layer. The hot pressing conditions included a press temperature of 40°C, a pressing pressure of 50 kg/cm² and a press time of 3 seconds. After bonding, the product was put in room temperature for 48 hours for aging.
The split leather product thus obtained had a thickness of 1.68 mm, a split leather (base material) thickness of 0.90 mm, and a skin layer thickness of 0.78 mm (including an adhesive layer of 0.03 µm). The obtained split leather product was evaluated in accordance with the above-described evaluation methods. The results are given in Table 2.

### Example 7

A skin layer B having a suede-finished surface 0.49 mm thick was obtained using the skin layer precursor obtained in Example 6, and was dyed black in the same way as in Example 6. The skin layer B was bonded in the same way as in Example 6, by hot pressing, to the surface of split leather from cowhide (density 0.612 g/cm³) having a thickness of 1.10 mm. After bonding, the product was put in room temperature for 48 hours for aging. The split leather product thus obtained had a thickness of 1.62 mm, a base material thickness of 1.10 mm and a skin layer thickness of 0.52 mm (including an adhesive layer of 0.03 µm). The obtained split leather product was evaluated in accordance with the above-described evaluation methods. The results are given in Table 2.

### Example 8

Herein there was used the same skin layer B, 0.49 mm thick, as used in Example 7. The skin layer B was bonded in the same way as in Example 6, by hot pressing, to the surface of split leather from cowhide (density 0.612 g/cm³) having a thickness of 1.50 mm. After bonding, the product was put in room temperature for 48 hours for aging. The split leather product thus obtained had a thickness of 2.02 mm, a base material thickness of 1.50 mm and a skin layer thickness of 0.52 mm (including an adhesive layer of 0.03 µm). The obtained split leather product was evaluated in accordance with the above-described evaluation methods. The results are given in Table 2.

### Comparative example 3

The surface of split leather from cowhide (density 0.62 g/cm³) having a thickness of about 1.60 mm was napped by buffing using #400 sandpaper, to yield a split leather product having a napped surface. The obtained split leather product had a thickness of 1.53 mm. The obtained split leather product was evaluated in accordance with the above-described evaluation methods. The results are given in Table 2.

### Comparative example 4

The skin layer A obtained in Example 6, without bonding to a base material comprising split leather, was evaluated in accordance with the above evaluation methods. The results are given in Table 2.

**Table 2**

| Example No. | Example 6 | Example 7 | Example 8 | Comparative example 3 | Comparative example 4 |
|---|---|---|---|---|---|
| Base material thickness (mm) | 0.90 | 1.10 | 1.50 | 1.60 | - |
| Skin layer thickness (mm) | 0.78 | 0.52 | 0.52 | - | 0.68 |
| Product thickness (mm) | 1.68 | 1.62 | 2.02 | 1.53 | 0.68 |
| Basis weight (g/m²) | 1156 | 1251 | 1369 | 937 | 332 |
| Base material thickness proportion (%) | 55 | 70 | 75 | - | - |
| Density (g/m³) | 0.688 | 0.772 | 0.693 | 0.612 | 0.488 |
| Convex bending evaluation | Excellent | Excellent | Excellent | Excellent | Poor |
| Flame retardancy | Self-extinguishing | Self-extinguishing | Self-extinguishing | Self-extinguishing | Flammable |
| Napped surface appearance | Excellent | Excellent | Excellent | Poor | Poor |
| Tensile strength at break (longitudinal. kg/25 mm) | 78.0 | 115.3 | 140.9 | 72.8 | 29.0 |
| Tenable strength at break (transversal, kg/25 mm) | 63.8 | 108.3 | 125.7 | 111. 7 | 23.1 |
| Tensile strength at break (oblique. kg/25 mm) | 50.5 | 115.1 | 121.6 | 107.6 | 27.5 |
| Tensile elongation at break (longitudinal, %) | 45 | 56 | 61 | 50 | 103 |
| Tensile elongation at break (transversal, %) | 47 | 53 | 56 | 47 | 142 |
| Tensile elongation at break (oblique, %) | 66 | 59 | 52 | 66 | 118 |
| Tensile strength at 5% elongation (longitudinal, kg/25 mm) | 5.1 | 4.5 | 4.0 | 1.0 | 2.5 |
| Tensile strength at 5% elongation (transversal, kg/25 mm) | 5.0 | 7.9 | 7.2 | 1.7 | 0.3 |
| Tensile strength at 50% elongation (oblique, kg/25 mm) | 3 . 8 | 5 . 6 | 4.4 | 0.5 | 0.9 |
| Tensile strength at 20% elongation (longitudinal, kg/25 mm) | 35.5 | 32.2 | 29.6 | 13.6 | 9.0 |
| Tensile strength at 20% elongation (transversal, kg/25 mm) | 24.2 | 39.0 | 42.5 | 34.4 | 2.7 |
| Tensile strength at 20% elongation (oblique, kg/25 mm) | 17.9 | 33.5 | 28.2 | 11.5 | 8.0 |
| Tear strength (longitudinal. kg/25 mm) | 12.5 | 13.5 | 14.5 | 12.8 | 4.5 |
| Tear strength (transversal. kg/25 mm) | 12.5 | 12.7 | 14.4 | 10.3 | 3.8 |

The split leather products having the napped surfaces in all Examples 6 to 8 exhibited, when the products were bent, a rounded bending shape and a napped surface appearance identical to those in suede derived from cowhide. The split leather products exhibited also excellent flame retardancy, and little mechanical characteristic anisotropy. The split leather of Comparative example 3 without a skin layer, obtained through nap-raising of the surface layer of split leather, exhibited the same rounded bending shape as in cowhide suede, and had flame retardancy, but the appearance of the napped surface was poor. In suede-finished artificial leather comprising only the skin layer, without any split leather bonded thereto, the bending shape resulting from bending was not rounded but exhibited a distinctly sharper angle than that of cowhide, with a poor feel. Flame retardancy was likewise poor. The products obtained in Comparative example 3 and Comparative example 4 exhibited all significant mechanical characteristic anisotropy.

## Claims

1. A split leather product (10, 20, 30), comprising: a base material (1) comprising split leather: and a skin layer (3) laminated on a surface of the base material (1),
**characterized in that** the skin layer (3) comprises a composite body of an entangled nonwoven fabric (3a) formed from microfine fibers, and a polymeric elastomer (3b) contained within the entangled nonwoven fabric (3a).

2. The split leather product (10, 20, 30) according to claim 1, wherein the thickness of the base material (1) accounts for equal to or greater than 50% of the overall thickness.

3. The split leather product (10, 20, 30) according to claim 1, wherein the thickness of the base material (1) accounts for equal to or greater than 55% of the overall thickness.

4. The split leather product (10, 20, 30) according to any one of claims 1 to 3, wherein the thickness of the skin layer (3) ranges from 0.1 to 2 mm.

5. The split leather product (10, 20, 30) according to any one of claims 1 to 4, wherein a fineness of the microfine fibers ranges from 0.0001 to 0.5 dtex.

6. The split leather product (10, 20, 30) according to any one of claims 1 to 5, wherein the polymeric elastomer (3b) is a polyurethane elastomer.

7. The split leather product (10, 20, 30) according to any one of claims 1 to 6, wherein a resin layer (4) comprising a polyurethane elastomer is formed on the surface of the skin layer (3).

8. The split leather product (10, 20, 30) according to claim 7, wherein the thickness of the skin layer (3) ranges from 0.4 to 0.8 mm and the thickness of the resin layer (4) ranges from 0.005 to 0.07 mm.

9. The split leather product (10, 20, 30) according to claim 7 or 8, wherein the ratio between the thickness of the resin layer (4) and the thickness of the skin layer (3) (resin layer /skin layer) ranges from 0.05 to 0.12.

10. The split leather product (10, 20, 30) according to any one of claims 1 to 6, wherein the microfine fibers that are present on the surface of the skin layer (3) are napped.

11. A method for manufacturing a split leather product (10, 20, 30), comprising:
a skin-layer split leather formation step of forming a split leather with skin layer (3) by bonding a base material (1) comprising split leather to a skin layer (3) that is a composite body of an entangled nonwoven fabric (3a) formed from microfine fibers, and a polymeric elastomer (3b) contained within the entangled nonwoven fabric (3a); and
a resin layer formation step of forming a resin layer (4) comprising a polyurethane resin on the surface of the skin layer (3) in the skin-layer split leather.

12. The method for manufacturing a split leather product (10, 20, 30) according to claim 11, wherein the resin layer formation step comprises a step of, after overlaying a nonwoven fabric comprising the polyurethane resin on the surface of the skin layer (3) bonding the nonwoven fabric, in the form of a film, through melting of the polyurethane resin by heat pressing.

## Patentansprüche

1. Spaltlederprodukt (10, 20, 30), umfassend:
ein Basismaterial (1), umfassend Spaltleder, und eine Hautschicht (3), laminiert auf einer Oberfläche des Basismaterials (1), **dadurch gekennzeichnet, dass** die Hautschicht (3) einen Kompositkörper eines verwobenen Faservliesstoffs (3a),
gebildet aus mikrofeinen Fasern, und eines polymeren Elastomers (3b), enthalten in dem verwobenen Faservliesstoff (3a), umfaßt.

2. Spaltlederprodukt (10, 20, 30) gemäß Anspruch 1, wobei die Dicke des Basismaterials (1) gleich oder mehr als 50% der Gesamtdicke ausmacht.

3. Spaltlederprodukt (10, 20, 30) gemäß Anspruch 1, wobei die Dicke des Basismaterials (1) gleich oder mehr als 55% der Gesamtdicke ausmacht.

4. Spaltlederprodukt (10, 20, 30) gemäß einem der Ansprüche 1 bis 3, wobei die Dicke der Hautschicht (3) von 0,1 bis 2 mm reicht.

5. Spaltlederprodukt (10, 20, 30) gemäß einem der Ansprüche 1 bis 4, wobei eine Feinheit der mikrofeinen Fasern von 0,0001 bis 0,5 dtex reicht.

6. Spaltlederprodukt (10, 20, 30) gemäß einem der Ansprüche 1 bis 5, wobei das polymere Elastomer (3b) ein Polyurethanelastomer ist.

7. Spaltlederprodukt (10, 20, 30) gemäß einem der Ansprüche 1 bis 6, wobei eine Harzschicht (4), umfassend ein Polyurethanelastomer, auf der Oberfläche der Hautschicht (3) gebildet ist.

8. Spaltlederprodukt (10, 20, 30) gemäß Anspruch 7, wobei die Dicke der Hautschicht (3) von 0,4 bis 0,8 mm reicht und die Dicke der Harzschicht (4) von 0,005 bis 0,07 mm reicht.

9. Spaltlederprodukt (10, 20, 30) gemäß Anspruch 7 oder 8, wobei das Verhältnis zwischen der Dicke der Harzschicht (4) und der Dicke der Hautschicht (3) (Harzschicht/Hautschicht) von 0,05 bis 0,12 reicht.

10. Spaltlederprodukt (10, 20, 30) gemäß einem der Ansprüche 1 bis 6, wobei die mikrofeinen Fasern, die auf der Oberfläche der Hautschicht (3) vorliegen, gerauht sind.

11. Verfahren zur Herstellung eines Spaltlederprodukts (10, 20, 30), umfassend:
einen Hautschicht-Spaltlederbildungsschritt des Bildens eines Spaltleders mit Hautschicht (3) durch Binden eines Basismaterials (1), umfassend Spaltleder,
an eine Hautschicht (3), die ein Kompositkörper eines verwobenen Faservliesstoffs (3a), gebildet aus mikrofeinen Fasern, und eines polymeren Elastomers (3b), enthalten in dem verwobenen Faservliesstoff (3a), ist und
einen Harzschicht-Bildungsschritt des Bildens einer Harzschicht (4), umfassend ein Polyurethanharz, auf der Oberfläche der Hautschicht (3) in dem Hautschicht-Spaltleder.

12. Verfahren zur Herstellung eines Spaltlederprodukts (10, 20, 30) gemäß Anspruch 11, wobei nach Aufeinanderlegen eines Faservliesstoffes, umfassend das Polyurethanharz, auf die Oberfläche der Hautschicht (3), der Harzschicht-Bildungsschritt einen Schritt des Bindens des Faservliesstoffes in der Form eines Films bzw. einer Folie durch Schmelzen des Polyurethanharzes mittels Anpreßdrücken bzw. Wärmepressen umfaßt.

## Revendications

1. Produit en croûte de cuir (10, 20, 30), comprenant : un matériau de base (1) comprenant de la croûte de cuir ; et une couche de peau (3) stratifiée sur une surface du matériau de base (1),
**caractérisé en ce que** la couche de peau (3) comprend un corps composite d'une étoffe non tissée entremêlée (3a) formée à partir de fibres microfines, et un élastomère polymérique (3b) contenu à l'intérieur de l'étoffe non tissée entremêlée (3a).

2. Produit en croûte de cuir (10, 20, 30) selon la revendication 1, dans lequel l'épaisseur du matériau de base (1) représente 50 % ou plus de l'épaisseur totale.

3. Produit en croûte de cuir (10, 20, 30) selon la revendication 1, dans lequel l'épaisseur du matériau de base (1) représente 55 % ou plus de l'épaisseur totale.

4. Produit en croûte de cuir (10, 20, 30) selon l'une quelconque des revendications 1 à 3, dans lequel l'épaisseur de la couche de peau (3) varie de 0,1 à 2 mm.

5. Produit de croûte de cuir (10, 20, 30) selon l'une quelconque des revendications 1 à 4, dans lequel une finesse des fibres microfines varie de 0,0001 à 0,5 dtex.

6. Produit en croûte de cuir (10, 20, 30) selon l'une quelconque des revendications 1 à 5, dans lequel l'élastomère polymérique (3b) est un élastomère de poly(uréthane).

7. Produit en croûte de cuir (10, 20, 30) selon l'une quelconque des revendications 1 à 6, dans lequel une couche de résine (4) comprenant un élastomère de poly(uréthane) est formée sur la surface de la couche de peau (3).

8. Produit en croûte de cuir (10, 20, 30) selon la revendication 7, dans lequel l'épaisseur de la couche de peau (3) varie de 0,4 à 0,8 mm et l'épaisseur de la couche de résine (4) varie de 0,005 à 0,07 mm.

9. Produit en croûte de cuir (10, 20, 30) selon la revendication 7 ou 8, dans lequel le rapport entre l'épaisseur de la couche de résine (4) et l'épaisseur de la couche de peau (3) (couche de résine / couche de peau) varie de 0,05 à 0,12.

10. Produit en croûte de cuir (10, 20, 30) selon l'une quelconque des revendications 1 à 6, dans lequel les fibres microfines qui sont présentes sur la surface de la couche de peau (3) sont grattées.

11. Procédé de fabrication d'un produit en croûte de cuir (10, 20, 30) comprenant :
une étape de formation d'une croûte de cuir de couche de peau consistant à former une croûte de cuir avec une couche de peau (3) en faisant adhérer un matériau de base (1) comprenant de la croûte de cuir à couche de peau (3) qui est un corps composite d'une étoffe non tissée entremêlée (3a) formée à partir de fibres microfines, et un élastomère polymérique (3b) contenu à l'intérieur de l'étoffe non tissée entremêlée (3a) ; et
une étape de formation de couche de résine consistant à former une couche de résine (4) comprenant
une résine de poly(uréthane) sur la surface de la couche de peau (3) dans la croûte de cuir à couche de peau.

12. Procédé de fabrication d'un produit en croûte de cuir (10, 20, 30) selon la revendication 11, dans lequel l'étape de formation de la couche de résine comprend une étape consistant à, après avoir superposé une étoffe non tissée comprenant la résine de poly(uréthane) sur la surface de la couche de peau (3), faire adhérer l'étoffe non tissée, sous la forme d'un film, via la fusion de la résine de poly(uréthane) par pressage à chaud.
